**Europäisches Patentamt**

**European Patent Office**

**Office européen des brevets**

(19)

(11) Publication number: **0 006 640**
**A1**

# EUROPEAN PATENT APPLICATION

(12)

(21) Application number: **79102251.0**

(22) Date of filing: **03.07.79**

(51) Int. Cl.³: **F 16 K 1/24**

(30) Priority: **03.07.78 NL 7807204**

(43) Date of publication of application: **09.01.80**
**Bulletin 80/1**

(84) Designated Contracting States: **DE FR GB NL SE**

(71) Applicant: **B.V. Machinefabriek en IJzergieterij "Holland-Bergen op Zoom", Havendijk 6, NL-4600-AA Bergen op Zoom (NL)**

(72) Inventor: **Baas, Hendrik Berhard, den Berg 20, NL-4661 KZ Halsteren (NL)**

(74) Representative: **Siedsma, Antonius et al, Isartorplatz 5, D-8000 Munich 2 (DE)**

(54) **A butterfly valve.**

(57) A butterfly valve comprising a substantially cylindrical housing (7) with a seat (10) and a valve member (11) supported rotatably in the housing and cooperating with said seat, said valve member being provided with actuating means lying outside the housing, the spindle (12) of the valve member being supported excentrically in sleeves (13) which are rotatably mounted in the housing, said sleeves being provided with actuating means lying outside the housing, so that upon a rotational movement of the sleeves the spindle of the valve will be displaced in a direction perpendicular or substantially perpendicular to the plane of the seat, wherein the excentric bearing of the spindle of the valve is self-locking such that under the influence of the forces acting inside the housing on the valve member the bearing sleeves will not be rotated.

ACTORUM AG

-1-

A butterfly valve

The invention relates to a butterfly valve comprising a substantially cylindrical housing with a seat and a valve member supported rotatably in the housing and cooperating with said seat, said valve member being provided with actuating means lying outside the housing, the spindle of the valve member being supported excentrically in sleeves which are rotatably mounted in the housing, said sleeves being provided with actuating means lying outside the housing, such that upon a rotational movement of the sleeves the spindle of the valve will be displaced in a direction perpendicular of substantially perpendicular to the plane of the seat.

In such an embodiment of a butterfly valve first the valve member is brought in the position in which the valve member is closed. Then by rotating the bearing sleeves the valve member is pressed onto the seat in the right position with a strong pressure. In rotating the valve member there is no friction resistance to overcome as a result of the movement of the sealing edge along the seat.

It is an object of the invention to provide a valve which in the closed position of the valve member is automa-

tically locked.

According to the invention the excentric bearing of the spindle of the valve is self-locking such that under the influence of the forces acting inside the housing on the valve member the bearing sleeves will not be rotated. So, the valve member is automatically locked without the necessity to lock the actuating means of the valve from the outside.

According to the invention the actuating means of the valve member and the actuating means of the bearing sleeves can be connected by a common actuating device and the reaction force created upon actuating the valve member is produced by the actuating member connected with the bearing sleeves, so that the bearing sleeves will be rotated under influence of the reaction force, when this force in the closed position of the valve member increases and passes a well defined value. One has then one single actuating device. First the actuating device is used for bringing the valve member in the closed position and when in the closed position the reaction force passes a defined value, the actuating device will also rotate the bearing sleeves so that the valve member is pressed home on its seat.

According to the invention the valve member in the closed position can engage a stop in order to let increase the reaction force.

In an advantageous embodiment of a butterfly valve the seat of the valve has a seating surface defining a section of an oblique cone having its apex lying in the wall of the cylindrical housing, a section of the cone perpendicular to the axis of the housing being in the shape of a circle and the rotating axis of the valve member lying excentrically in relation to the axis of the cylindrical housing and lying displaced in axial direction in relation to the plane of the sealing edge of the valve member.

In such an embodiment of a butterfly valve it is under normal circumstances possible by increasing the rotating force on the spindle of the valve member to increase the pressure of the valve member on the sealing edge of the seat so that one has a better sealing. Then however, it is necessary that the edge of the valve member is of elastic

-3-

material. This again has the disadvantage that the embodiment can only be used when the working conditions are such that the elastic material maintains its elasticity.

When non-elastic materials for the sealing edges were used, such an embodiment would be only possible when the parts of the valve would be machined in ideal way and there would be an exact fit which would be maintained in difficult working conditions so as big temperature differences.

According to the invention it is possible to have an embodiment of such a valve with sealing edges of the valve member and of the seat of a stiff material, more especially metal or plastic. Then the sealing effect needs not to be obtained by increasing the force on the spindle of the valve member but by displacing the spindle of the valve member in the closed position in the direction of the seat.

In an advantageous embodiment according to the invention the actuating member of the bearing sleeves can be biassed by a spring for rotating the bearing sleeves in the direction in which the valve member is removed from its seat. Then the valve member automatically is released from its seat when the actuating device is actuated in opposite direction.

According to the invention the actuating device for the valve member and for the bearing sleeves can consist of a cylinder and a piston, one of which is connected with the actuating member of the valve member and the other of which is connected with the actuating member of the bearing sleeves. By supplying pressure fluid on one side of the piston the valve member can be closed and be pressed onto the seat and by supplying the pressure fluid on the other side of the piston the valve member can be released from its seat.

The invention will be elucidated in the following description of some embodiments shown in the drawing.

In the drawing shows:

Fig. 1 schematically a section of a valve,

Fig. 2 an embodiment of a valve partly in section and partly in side view,

Fig. 3 a valve according to the invention in another embodiment in a side view and partly in section,

Fig. 4 a section according to the line IV-IV from figure 3.

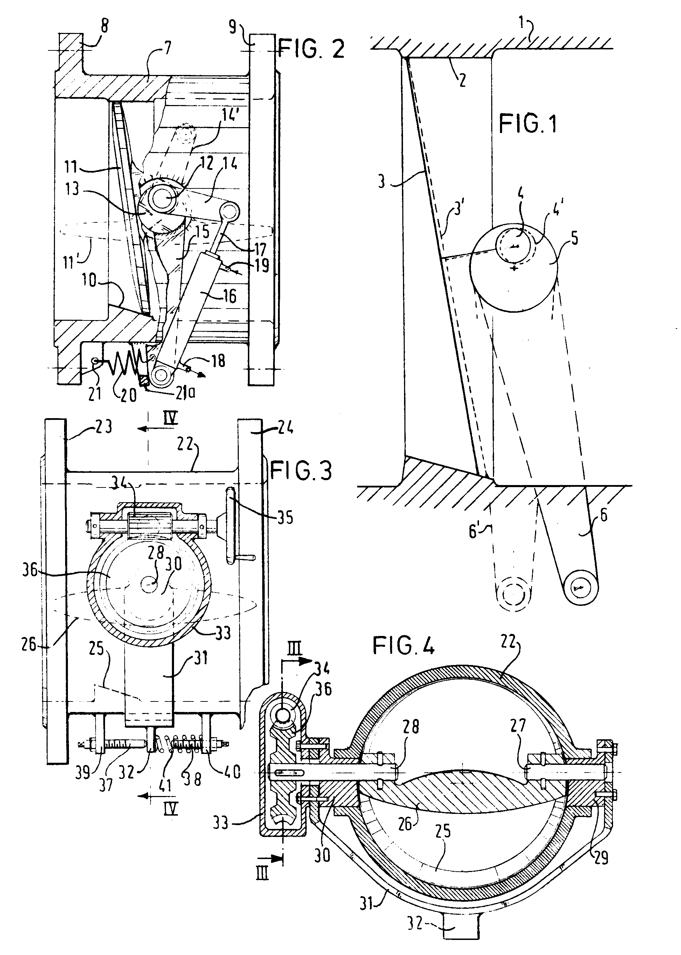

Figure 1 shows in section a valve according to the invention. The housing 1 has a seat 2, the seating surface of which is part of a cone, the apex of the cone lying in the wall of the housing 1 and a section perpendicular to the axis of the housing has the shape of circle. With the seat 2 cooperates a valve member 3 which is mounted on spindle 4 which is excentrically rotatably supported in a sleeve 5 which is supported in the wall of the housing 1. The spindle 4 lies with its axis excentrically in relation to the axis of the housing 1 and the spindle 4 also is displaced in relation to the plane of the valve member 3. The sleeve 5 can be rotated by means of an arm 6. The actuating device of the spindle 4 is not shown. When the valve is in the fully open position, the spindle 4 is located as indicated with the dotted line 4'. The sleeve 5 is then rotated and the arm 6 is in the position 6'. When then the spindle 4 is rotated the valve 3 is brought in the position 3' and contacts then the seat 2 in the housing 1. The spindle 4 can not be rotated further without applying extremely strong forces. When the seat 2 is of a stiff material and the same is true for the edge of the valve 3, the valve can not be rotated further than the position 3'. When the arm 6' is brought in the position 6 then owing to the excentric bearing of the spindle 4 in the sleeve 5, the spindle 4 will be displaced in substantially axial direction of the housing so that the valve member from the position 3' is brought in the position 3. This displacement can be done with a strong force and one has a very good seating of the valve member 3 in the housing. In the drawing the dimensions are not exact because the drawing is only meant for a schematic elucidation. Figure 2 shows a housing 7 with flanges 8 and 9 to mount the housing 7 in a pipeline. The housing 7 has a seat corresponding with the seat 10 from figure 1. With this seat cooperates a valve member 11 which is supported with its spindle 12 in the sleeve 13. The bearing in the sleeve 13 is also excentric. The spindle 12 has an actuating arm 14 whereas the sleeve 13 has an actuating arm 15. With the actuating arm 15 is rotatably connected a cylinder 16 whereas the piston rod 17 of piston which can move in the cylinder 16, is connected with the arm 14. Through the connections 18 and 19 a pressure fluid can be supplied to the cylinder 16 on opposite sides of the pistion. The arm 15 is biassed by a draw spring 20 against a stop 21a, the spring 20 is with its one end attached to the arm 15 and with its other end at 21 to the housing 7.

In the open position the valve member is in the position 11' and the arm 14 is in the position 14'. When pressure fluid is supplied through the connection 19, the arm 14 will be swung to the right so that the valve member 11' is brougth in the position 11. The valve member 11 then touches the seat 10. The spring 20 is dimensioned in such a way that the reaction force upon the rotation of the valve member 11 is not sufficient to overcome the force exerted by the spring 20 on the arm 15. So the arm 15 will not swing and the sleeve 13 remains in the position as shown in the drawing. When however, the valve member 11 contacts the seat 10, the reaction force which has to be supplied by the cylinder will increase and the force of the spring 20 now can be overcome so that the arm 15 is swung to the right and the valve member 11 is pressed onto its seat 10. When then again pressure fluid is supplied through the connection 18 the spring 20 will bring the arm 15 back in the drawn position and the valve member 11 is released from its seat and after that the valve member can be rotated into the position 11'.

The figures 3 and 4 again show a housing 22 with flanges 23 and 24. The housing has a seat 25 and a valve member 26 cooperating with said seat. The valve member 26 has spindle parts 27 and 28 which are supported excentrically in sleeves 29 resp. 30 which sleeves are rotatbly supported in the housing 22. The sleeves 29 and 30 are connected by a bracket 31 which has a stop portion 32. On the sleeve 30 is mounted a housing 33 of a worm gearing. The worm 34 can be driven by means of a hand-wheel 35 and the toothwheel 36 is mounted on the spindle part 28. The stop portion can perform a limited movement between two bolts 37 and 38. These bolts are mounted in portions 39 and 40 connected to the housing of the valve. The stop portion 32 and so the bracket 31 is biassed by a pressure spring 41. In the position shown in the drawing the valve is open. By means of the handwheel 35 the worm gear transmission can be actuated so that the valve member can be rotated into the closed position in which the valve member 26 cooperates with the seat 25. In this position of the valve member the reaction force which is supplied by the housing of the transmission will increase and the pressure of the spring 41 will be overcome so that the bracket 31 is swung and the valve is pressed with a large force onto the seat 25. The excentricity of the spindles of the valve and the lengths of the lever arms is in both embodiments such that a force working on the valve member will not rotate the bearing sleeve. So, it is not necessary to take special steps to lock the valve in the closed position. This locking of the valve is obtained automatically.

-1-

A butterfly valve

CLAIMS:

1. A butterfly valve comprising a substantially cylindrical housing with a seat and a valve member supported rotatably in the housing and cooperating with said seat, said valve member being provided wiht actuating means lying outside the housing, the spindle of the valve member being supported excentrically in sleeves which are rotatably mounted in the housing, said sleeves being provided with actuating means lying outside the housing, such that upon a rotational movement of the sleeves the spindle of the valve will be displaced in a direction perpendicular or substantially perpendicular to the plane of the seat, characterized in that the excentric bearing of the spindle of the valve is self-locking such that under the influence of the forces acting inside the housing on the valve member the bearing sleeves will not be rotated.

2. A butterfly valve as defined in claim 1 characterized in that the actuating means of the valve member and the actuating means of the bearing sleeves are connected by a common actuating device and the reaction force created upon actuating the valve member is produced by the actuating member connected with the bearing sleeves so that the bearing sleeves will be rotated under influence of the reaction force, when this force in the closed position of the valve member increases and passes a well defined value.

3. A butterfly valve as defined in claim 1 or 2, characterized in that the valve member in the closed position engages a stop in order to let increase the reaction force.

4. A butterfly valve as defined in one or more of the preceeding claims in which the seat has a seating surface defining a section of an oblique cone having its apex lying in the wall of the cylindrical housing, a section of the cone perpendicular to the axis of the housing being in the shape of a circle and the rotating axis of the valve member lying excentrically in relation to the axis of the cylindrical housing and lying displaced in axial direction in relation to the plane of the sealing edge of the valve member, characterized in that the sealing edge of the valve member and the sealing edge of the seat consists of a stiff material, more especially metal or plastic.

5. A butterfly valve as defined in anyone of the preceeding claims, characterized in that the actuating member of the bearing sleeves is biassed by a spring for rotating the bearing sleeves in the direction in which the valve member is removed from its seat.

6. A butterfly valve as defined in one or more of the preceeding claims, characterized in that the actuating device for the valve member and for the bearing sleeves consists of a cylinder and a piston, one of which is connected with the actuating member of the valve member of the bearing sleeves, said cylinder having connections for supplying a pressure fluid on either side of the piston.

7. A butterfly valve as defined in one or more of the claims 1 to 5, characterized in that the actuating device consists of a worm gearing of which the casing is mounted on the bearing sleeves and the toothed wheel is connected with the spindle of the valve member and that the housing is provided with a bracket, which can move between two fixed stops and which is biassed by a spring.

FIG. 2

FIG.1

FIG.3

FIG.4

0006640

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | US - A - 2 811 981 (HARRIS) <br> * Column 2, lines 1-21 * <br> -- | 1 | F 16 K 1/24 |
| | FR - A - 1 392 279 (INDUSTRIE-COMPANIE KLEINEWEFERS KONSTRUKTIONS UND HANDELSGESELLSCHAFT) <br> * Page 2, line 81 - page 3, line 13 * <br> -- | 1 | |
| | FR - A - 1 184 986 (TAILLEFERRE) <br> * Page 2, left-hand column, line 21 - right-hand column, line 27 * <br> -- | 1 | **TECHNICAL FIELDS SEARCHED (Int.Cl.²)** <br><br> F 16 K |
| | DE - B - 1 042 996 (ZIMMERMANN & JANSEN) <br> * Entirely * <br> ---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 19-09-1979 | VERELST |

EPO Form 1503.1   06.78